# EUROPÄISCHE PATENTSCHRIFT

(11) **EP 1 151 559 B1**
(45) Veröffentlichungstag und Bekanntmachung des Hinweises auf die Patenterteilung: **09.10.2002**
(21) Anmeldenummer: 00903583.3
(22) Anmeldetag: 17.01.2000
(51) Int. Cl.: H04B 10/135

(54) **REDUKTION DER VERZERRUNG VON OPTISCHEN IMPULSEN DURCH DIE POLARISATIONSMODENDISPERSION IN OPTISCHEN ÜBERTRAGUNGSSYSTEMEN**
REDUCTION OF THE DISTORTION OF OPTICAL IMPULSES THROUGH POLARISATION MODE DISPERSION IN OPTICAL TRANSMISSION SYSTEMS
REDUCTION DE LA DISTORSION D'IMPULSIONS OPTIQUES PAR DISPERSION DE POLARISATION DE MODE DANS DES SYSTEMES DE TRANSMISSION OPTIQUES

(30) Priorität: 03.02.1999 DE 19904137
(43) Veröffentlichungstag der Anmeldung: 07.11.2001
(73) Patentinhaber: Deutsche Telekom AG, 53113 Bonn (DE)
(72) Erfinder: DULTZ, Wolfgang, D-65396 Frankfurt (DE); BERESNEV, Leonid, Columbia, MD 21044 (US); FRINS, Erna, 11400 Montevideo (UY); KÜPPERS, Franko, D-64295 Darmstadt (DE); SCHMITZER, Heidrun, D-93051 Regensburg (DE); VOBIAN, Joachim, D-64367 Mühltal (DE); WEIERSHAUSEN, Werner, D-64367 Mühltal (DE)
(86) Internationale Anmeldenummer: EP0000320
(87) Internationale Veröffentlichungsnummer: WO00046942

(56) Entgegenhaltungen:
- EP-A- 0 716 516
- US-A- 5 793 511
- WINTERS J H ET AL: "OPTICAL EQUALIZATION OF POLARIZATION DISPERSION" PROCEEDINGS OF THE SPIE, 1. Januar 1992 (1992-01-01), XP000568232
- SHIMIZU H ET AL: "HIGHLY STABLE POLARIZATION CONTROLLER USING FIBER SQUEEZERS" PROCEEDINGS OF THE EUROPEAN CONFERENCE ON OPTICAL COMMUNICATION (ECOC),S,GOTHENBURG, CHALMERS UNIVERSITY, Bd. CONF. 15, 1989, Seiten 543-546, XP000437825
- MORKEL P R ET AL: "PMD-INDUCED BER PENALTIES IN OPTICALLY-AMPLIFIED IM/DD LIGHTWAVE SYSTEMS" ELECTRONICS LETTERS,GB,IEE STEVENAGE, Bd. 30, Nr. 10, 12. Mai 1994 (1994-05-12), Seiten 806-807, XP000464230 ISSN: 0013-5194

## Beschreibung

Die Erfindung betrifft ein Verfahren zur Reduktion der Verzerrung von optischen Impulsen in optischen Übertragungssystemen nach Anspruch 1 und ein optisches Übertragungssystem mit reduzierter Verbreiterung der das System durchlaufende optische Impulse nach Anspruch 5.

In der optischen Nachrichtenübertragung werden häufig optische Komponenten, beispielsweise optische Bauelemente und Glasfasern verwendet, die nur in erster Näherung isotrop oder von Natur aus optisch nicht isotrop sind. Beispielsweise weisen die in photonischen Netzen verwendeten Glasfasern im allgemeinen aufgrund des Herstellungsprozesses und des Aufbaus oder durch äußere Umstände, wie beispielsweise Temperatur- und Druckschwankungen, aber auch Biegungen der Faser selbst, optische Anisotropien auf. Diese, zum Teil ortsabhängigen Anisotropien haben auch eine optische Doppelbrechnung zur Folge, die auch von Ort zu Ort in der Faser variieren kann. Die Doppelbrechung führt dazu, daß sich in einem betrachteten Faserabschnitt zwei orthogonal polarisierte Eigenwellen des Lichtes mit unterschiedlicher Phasengeschwindigkeit ausbreiten. Für den allgemeinen Fall der Transmission eines optischen Signals, insbesondere eines optischen Impulses mit beliebiger Polarisation durch die Faser bedeutet dies, daß der optische Puls aufgrund der unterschiedlichen Geschwindigkeit der verschiedenen Polarisationskomponenten im Verlauf des Fortpflanzens verzerrt, d.h. verbreitert wird. Diese Verbreiterung der optischen Impulse limitiert insbesondere die Übertragungsrate im Übertragungssystem.

Aus dem Aufsatz "Optical equalization of polarization dispersion", proceedings of the SPIE, 01. Januar 1992 (1992-01-01) beschreibt Winters J.H. et'al ein optisches Entzerrersystem, mit dem die Einflüsse der Polarisationsmodendispersion verringert werden können. Ein solches optisches Entzerrersystem bildet den Oberbegriff der unabhängigen Ansprüche 1 und 5. Ein Nachteil dieses optischen Entzerrersystems ist darin zu sehen, daß zur Erzeugung der Steuersignale für die Polarisationsstellglieder das optische Empfangssignal vollständig in einem oder mehreren Empfängern empfangen und entsprechend ausgewertet wird. Eine weitere Übertragung des optischen Signals ist nicht mehr möglich.

Aus der US-A-5 793 511 ist ein optischer Empfänger mit einer Entzerrerschaltung bekannt, welche ein durch Polarisationsmodendispersion verzerrtes optisches Signal entzerren kann. Hierzu wird das empfangene optische Signal in zwei elektrische Komponenten umgesetzt, aus denen die Entzerrerschaltung ein Qualitätsignal zum Ansteuern eines im Empfänger implementierten Polarisations-Stellgliedes erzeugt.

Die EP-A-0 716 516 offenbart eine Polarisationsdiversity-Detektionstechnik für optische Signale, die über eine Einmodenfaser übertragen werden. Um Verzerrungen infolge von Polarisationsmodendispersionen in der Faser zu kompensieren, wird eine Polarisations-Diversitydetektion durchgeführt. Hierzu wird das optische Empfangssignal zunächst mittels eines Polarisations-Strahlteilers in eine erste und zweite Polarisationskomponente zerlegt. Anschließend wird in Aabhängigkeit von der Phasendifferenz zwischen beiden Polarisationskomponenten ein Steuersignal zur Steuerung einer Polarisations-Stelleinrichtung erzeugt.

Der Erfindung liegt die Aufgabe zugrunde, ein Verfahren zur Reduktion der Verzerrung von optischen Impulsen in optischen Übertragungssystemen aufgrund der Polarisationsmodendispersion bereitzustellen, das kostengünstig durchgeführt werden kann, flexibel an das jeweilige optische Übertragungssystem angepaßt werden kann und insbesondere auch dynamische Fluktuationen in Bezug auf die Doppelbrechung berücksichtigt. Weiterhin soll ein entsprechendes optisches Übertragungssystem bereitgestellt werden, welches die erwähnten Nachteile der Systeme nach dem Stand der Technik nicht aufweist.

Dieses technische Problem löst die Erfindung zum einen mit den Verfahrensschritten umfassend die Merkmale des Anspruchs 1 und zum anderen mit den Merkmalen des Anspruchs 5.

Um die Übertragungsgüte im optischen Übertragungssystem auf einem optimalen Wert zu halten wird die Übertragungsgüte erfaßt und ein entsprechendes Signal an eine Regeleinrichtung angelegt, die eine Polarisationsstelleinrichtung zum Verändern des Polarisationszustandes der in einem nachrichtenübetragenden optischen Impulse ansteuert. Die Regeleinrichtung regelt die Polarisation der optischen Impulse derart, daß die Übertragungsgüte optimiert ist. Zur Bestimmung der Übertragungsgüte wird ein geringer, ausgekoppelter Teil des nachrichtenübertragenden Lichtstroms verwendet.

Allgemein läßt sich eine beliebige Transmissionseinrichtung, beispielsweise eine optische Faser oder eine andere optische Komponente bezüglich ihrer Doppelbrechungseigenschaften aus einer Reihe von doppelbrechenden Platten darstellen, von denen jede eine andere, statistisch variierende Doppelbrechung, Verzögerung . und Orientierung aufweist. Ein derartiger Satz von doppelbrechenden Platten ist für eine bestimmte Wellenlänge charakteristisch und daher von der Frequenz des einfallenden Lichtes abhängig.

Die Erfindung setzt auf der Erkenntnis auf, daß beispielsweise eine reale Glasfaser im allgemeinen durch einen Plattensatz repräsentiert wird, der nicht durch eine stochastische Anordnung von doppelbrechenden Platten charakterisiert wird, sondern daß es zumindest eine bevorzugte, d.h. im wesentlichen konstante Doppelbrechung in bestimmten Abschnitten der Faser gibt. Dies bedeutet, daß die optischen Eigenschaften in den genannten Abschnitten der Faser mittels einer einzelnen, dicken und/oder stark doppelbrechenden Platte beschrieben werden können. Ein sich innerhalb eines derartigen Abschnittes im Sinne eines optischen Pulses fortpflanzendes Informationssignal, welches in beide (Eigen)-Polarisationszustände des bevorzugt doppelbrechenden Faserstückes in gleichem Maße einkoppelt, wird in zwei Impulse von gleicher Intensität, aber von orthogonaler Polarisation aufgespalten. Beide Impulsanteile weisen im Medium eine unterschiedliche Gruppengeschwindigkeit auf, wodurch eine besonders hohe Verzerrung, d.h. Verbreiterung des ursprünglich eingekoppelten Signalpulses durch die Polarisationsmodendispersion auftritt, was insbesondere die Nachrichtenübertragungsrate beschränkt.

Das Prinzip der Erfindung besteht darin, dafür zu sorgen, daß der optische Impuls sich innerhalb des optischen Übertragungssystems, das zumindest einen Abschnitt mit bevorzugter Doppelbrechung aufweist, derartig fortpflanzt, daß das Signal im genannten Abschnitt eine Polarisation aufweist, die einen der beiden Hauptpolarisationszustände des Abschnittes, beispielsweise eines Faserstückes, entspricht. Dadurch wird erreicht, daß die Impulsform bei der Transmission durch den Abschnitt mit bevorzugter Doppelbrechung nicht verbreitert wird. Die optischen Impulse pflanzen sich innerhalb des Abschnittes mit bevorzugter Doppelbrechung nur in einem der beiden möglichen Kanäle fort, das heißt entweder in dem mit der hohen Fortpflanzungsgeschwindigkeit oder dem mit der langsamen Fortpflanzungsgeschwindigkeit, womit die optischen Impulse nicht aufgespalten oder verbreitert, sondern nur beschleunigt oder verzögert werden. Dies bleibt jedoch ohne nachteilige Folge in Bezug auf die Übertragungsrate, da die gesamte Impulsfolge eine Beschleunigung oder Verzögerung erfährt. Damit wird sichergestellt, daß der Abschnitt des optischen Übertragungsmediums, welcher eine bevorzugte Doppelbrechung aufweist und somit wesentlich zur Verbreiterung der optischen Impulse beitragen kann, in Bezug auf die Polarisationsmodendispersion innerhalb des gesamten Übertragungssystems "eliminiert" wird. Die verbleibende Verbreiterung des optischen Impulses wird somit nur noch durch die restlichen Abschnitte des Übertragungssystems hervorgerufen, welche beispielsweise durch eine stochastische Anordnung von dünnen doppelbrechenden Platten beschrieben werden kann. Die durch diese anderen Abschnitte des Übertragungssystems hervorgerufene Verbreiterung des optischen Impulses ist jedoch sehr viel geringer im Vergleich zu der möglichen Verzerrung des Impulses innerhalb des Abschnittes mit bevorzugter Doppelbrechung für den Fall, daß das Licht den letztgenannten Abschnitt nicht nur in einem der Hauptpolarisationszustände durchquert.

Die vorstehenden Erläuterungen gelten einerseits für den Fall, daß die optischen Impulse mittels der Polarisationsstelleinrichtung vor dem Eintritt in das optische Übertragungssystems derartig verändert werden, daß der Abschnitt mit bevorzugter Doppelbrechung in einem der Hauptpolarisationszustände des Abschnittes durchquert wird und gilt andererseits auch für den Fall, daß nur der Teil des optischen Informationssignals für die Datenübertragung berücksichtigt wird, welcher in einem der Hauptpolarisationszustände des Abschnittes mit bevorzugter Doppelbrechung durch diesen Abschnitt transmittiert wird. Beide Fälle beruhen auf dem erläuterten Prinzip der Erfindung und sind demgemäß äquivalent.

Erfindungsgemäß wird die Polarisationsstelleinrichtung zum Verändern der Polarisation des Informationssignals von der Regeleinrichtung derart angesteuert, daß die Übertragungsgüte maximiert wird. Diese geregelte maximale Übertragungsgüte korrespondiert demnach beispielsweise mit dem Fall, daß das optische Informationssignal sich innerhalb des Abschnittes mit bevorzugter Doppelbrechung in einem der beiden Hauptpolarisationszustände fortpflanzt oder daß nur der Teil des optischen Informationssignals berücksichtigt wird, auf den dieses zutrifft.

In einer vorteilhaften Ausführungsform der Erfindung wird die Maximierung der Übertragungsgüte zeitlich beabstandet wiederholt durchgeführt. Damit lassen sich zeitliche Fluktuationen der Größe und Orientierung der Doppelbrechung, die einen negativen Einfluß auf die Verzerrung der optischen Impulse haben können, vermindern. Diese, schon oben stehend erwähnten Fluktuationen, beispielsweise durch Temperaturschwankungen in einer optischen Faser hervorgerufen, können bewirken, daß die optischen Impulse den Abschnitt mit bevorzugter Doppelbrechung nicht mehr in einem von dessen Hauptpolarisationszustände durchqueren. Mittels der zeitlich beabstandeten Wiederholung der Maximierung der Übertragungsgüte wird die durch die Fluktuation hervorgerufene Verbreiterung des optischen Impulses wieder rückgängig gemacht.

Um der zeitlichen Veränderung des Polarisationszustandes am Eingang des optischen Übertragungssystems Rechnung zu tragen, kann dem Übertragungssystem das Polarisationsstellelement vorgeschaltet sein. Durch die Regelung des Polarisationsstellelementes wird sichergestellt, daß der Abschnitt mit bevorzugter Doppelbrechung trotz zeitlich fluktuierender Größe und Orientierung der Doppelbrechung innerhalb des Übertragungssystems, von den optischen Impulses in einem der beiden Hauptpolarisationszustände des Abschnittes durchquert wird.

Um das Licht verlustlos in den notwendigen Polarisationszustand umzuwandeln, kann die Polarisationsstelleinrichtung eine λ/4- eine λ/2- und eine weitere λ/4-Verzögerungseinrichtung umfassen, wobei die Verzögerungseinrichtungen hintereinander angeordnet und jeweils einstellbar sind. Mit einer solchen Polarisationsstelleinrichtung kann Licht, beispielsweise Lichtimpulse mit einem beliebigen Polarisationszustand in Licht mit einem anderen, beliebigen Polarisationszustand übergeführt werden.

Die Polarisationsstelleinrichtung kann aber auch am Ausgang des Übertragungssystems angeordnet sein, was die Regelung vereinfacht, da die Ermittlung der Übertragungsgüte genauso wie die Regelung als auch die Polarisationstelleinrichtung am gleichen Ort durchgeführt wird. Um nur den Anteil des Lichtes zu berücksichtigen ,welches sich in dem Abschnitt mit bevorzugter Doppelbrechung in einem der Hauptpolarisationszustände fortgepflanzt hat, ist hinter den Polarisationsstellelementen zusätzlich ein Analysator angeordnet.

Ist dieser Analysator ein linearer Analysator, so vereinfacht sich die Polarisationsstelleinrichtung dahingehend, daß diese nur eine λ/4- und eine λ/2-Verzögerungseinrichtung umfaßt, die jeweils einstellbar, das heißt drehbar sind. Mit einer derartigen Polarisationsstelleinrichtung kann Licht mit einer beliebigen Polarisation - hier Licht, welches den Abschnitt mit bevorzugter Doppelbrechung in einem von dessen Hauptpolarisationszustände transmittiert hat - in Licht mit einer linearen Polarisation - hier Licht, welches in Durchlassrichtung zum Analysator polarisiert ist - überführt werden.

In beiden das Prinzip der Erfindung nutzenden Anordnungen und Verfahren können die verwendeten Verzögerungseinrichtungen je nach spezieller Anwendung, beispielsweise in Abhängigkeit der verwendeten Wellenlänge ein Flüssigkristallelement oder einen elektrooptischen Kristall umfassen. Diese Verstellelemente weisen den Vorteil auf, daß sie antriebslos, das heißt elektrisch verstellt werden können. Erfolgt die Regelung mit nicht zu hohen Frequenzen, können auch einfache, mechanisch bewegliche Stellelemente verwendet werden.

Die Erfindung wird im folgenden unter Zugrundelegen einiger Ausführungsbeispiele mit Bezug auf die Zeichnungen beschrieben, wobei
- Fig. 1: eine Ausführungsform der Erfindung zeigt, bei welcher das Polarisationsstellelement vor dem optischen Übertragungssystem angeordnet ist und
- Fig. 2: eine Ausführungsform der Erfindung zeigt, bei welcher das Polarisationsstellelement am Ausgang des Übertragungssystems plaziert ist.

Erfindungsgemäß umfaßt das optische Übertragungssystem mit reduzierter Verzerrung der das System durchlaufenden optischen Impulse ein optisches Übertragungsmedium, das sich aus verschiedenen Abschnitten zusammensetzt. Diese können optische Komponenten, beispielsweise Faserkoppler, Schalter, Verstärker und andere Bauelemente, aber auch optische Leitungen (Fasern) umfassen. Zumindest ein Abschnitt des Übertragungssystems weist eine bevorzugte Doppelbrechung auf. Weiterhin umfaßt das erfindungsgemäße optische Übertragungssystem eine Einrichtung zur Bestimmung der Übertragungsgüte am Ende des Übertragungssystems. Diese Einrichtung gibt ein von der Übertragungsgüte abhängiges Ausgangssignal ab, welches am Eingang einer Regeleinrichtung anliegt. Diese Regeleinrichtung steuert eine Polarisationsstelleinrichtung an, die von den optischen Impulsen transmittiert wird und somit zum Verändern der Polarisation der optischen Impulse eingerichtet ist. Unter Ansprechen der erfaßten Übertragungsgüte des Übertragungssystems wird die Polarisationsstelleinrichtung derartig angesteuert, daß die Übertragungsgüte maximiert wird, d. h. die verschiedenen Parameter zum Einstellen der Stellelemente der Polarisationsstelleinrichtung werden solange verändert, bis die Übertragungsgüte optimal ist und sich nicht weiter verbessern läßt.
Im einzelnen erfolgt die Regelung des Polarisationsstellelementes so, daß die Übertragungsgüte gemessen wird, das Stellelement anschließend etwas in eine beliebige Richtung in einem Parameterraum verstellt wird.

Daraufhin wird die Übertragungsgüte erneut gemessen. Ist die Übertragungsgüte größer geworden, so verstellt die Regeleinrichtung das Stellelement weiter in diese Richtung, ansonsten in die entgegengesetzte Richtung. Ändert sich die Übertragungsgüte wenig oder gar nicht, so verstellt die Regeleinrichtung das Polarisationsstellelement in eine zur ersten orthogonalen Richtung im Parameterraum. Dieses Verfahren führt zu einem lokalen Maximum der Übertragungsgüte im Parameterraum des Polarisationsstellelementes. Das Verfahren wird in gewissen Abständen wiederholt und die Übertragungsgüte des Übertragungssystems dadurch auf einem hohem Niveau gehalten.

Zur Feststellung der Übertragungsgüte kann beispielsweise die Bitfehlerrate dienen. Sie wird mit speziellen Meßinstrumenten ermittelt und gibt als Verhältnis an, wieviel Lesefehler in einer bekannten Folge von übertragenen Impulsen auftreten. In einer anderen Ausführungsform der Erfindung dient als Maß für die Übertragungsgüte des Übertragungssystems das sogenannte Augendiagramm. Weiterhin kann auch die Polarisationsmodendispersion selbst als Maß für die Übertragungsgüte dienen. Wie die Bitfehlerrate und das Augendiagramm kann diese allerdings nur mit relativ viel Aufwand bestimmt werden. Daher findet in den meisten Ausführungsformen der Erfindung die bei vielen digitalen Übertragungsverfahren übliche Redundanzüberwachung Anwendung, um ein Maß für den Übertragungsfehler und damit die Übertragungsgüte im Übertragungssystem zu erhalten.

Bei der Redundanzüberwachung werden aus dem zu übertragenden Datensatz (Payload) die sogenannte Paritätsinformationen (Parity Bytes) berechnet und dem Datensatz hinzugefügt. Die Paritätsinformation wird aus einer einfachen Berechnung gewonnen. Momentan ist sie für optische Übertragungssyateme mit synchroner digitaler Hierarchie definiert als Rest einer Quotientenbildung aus dem Payloadcode und einem voreingestellten Schlüsselcode. An allen Punkten der optischen Übertragungsstrecke, an denen die Signale digital ausgewertet werden können, kann die Paritätsinformation entnommen und Datenblöcke mit fehlerhaften Informationen sofort erkannt werden. Im Gegensatz zur Bitfehlerrate gestattet die beschriebene Redundanzüberwachung nur die Bestimmung einer Datenblockfehlerrate, da jedem Parity Byte jeweils ein ganzer Datensatz zugeordnet ist, der demnach nur als Ganzes überprüft werden kann. Da bei der Signalverzerrung, das heißt der Verbreiterung des optischen Impulses aufgrund der Polarisationsmodendispersion aber typischerweise keine sogenannten Burstfehler auftreten, d. h. die Fehler in etwa zeitlich gleich verteilt sind, ist die Redundanzüberwachung und ein sich daraus ergebendes Signal Q als Eingangssignal für die Regelungseinrichtung geeignet.

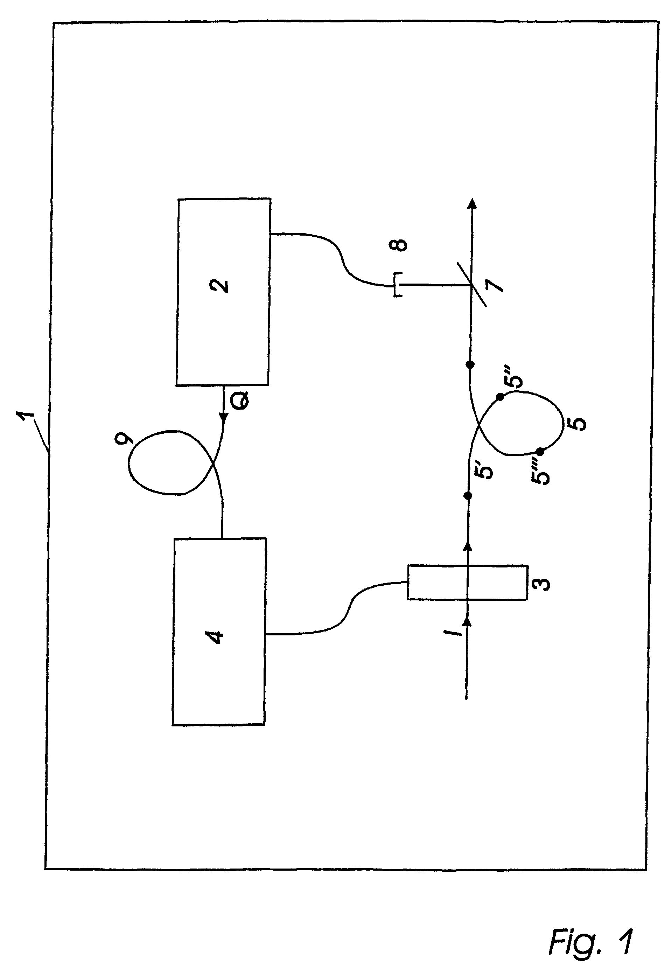

Fig. 1 zeigt eine beispielhafte Ausführungsform eines erfindungsgemäßen optischen Übertragungssystems 1 mit reduzierter Verzerrung des das System durchlaufende Informationssignal. Das optische Informationssignal in Form von optischen Impulsen transmittiert durch ein Polarisationsstellelement 3 bevor es in das optische Übertragungsmedium 5 eintritt. Dieses optische Übertragungsmedium 5 umfaßt verschiedene Abschnitte 5', 5'', 5''', wobei in dem vorliegenden Beispiel der Abschnitt 5'' ein Abschnitt ist, in welchem eine bevorzugte Doppelbrechung auftritt. Im vorliegenden Fall stellt das optische Übertragungsmedium eine Glasfaserstrecke dar. Die anderen Abschnitte 5', 5''' weisen in Bezug auf die Doppelbrechung eine stochastische Verteilung auf. Diese Bereiche lassen sich demnach durch eine zufällig Anordnung von doppelbrechenden Platten charakterisieren. Hinter dem Übertragungsmedium fällt das optische Informationssignal, beispielsweise ein optischer Impuls auf einen Strahlteiler 7, welcher einen geringen Teil des nachrichtenübertragenden Lichtstromes auskoppelt. Ein Detektor 8 wandelt den ausgekoppelten Teil des Informationssignals in ein elektrisches Signal um, welches an einer Einrichtung 2 zur Bestimmung der Übertragungsgüte des Übertragungssystems 1 anliegt. In der Einrichtung 2 wird mittels der oben beschriebenen Redundanzüberwachung ein Signal Q erzeugt, welches ein Maß für die Übertragungsgüte darstellt. Dieses Signal wird über eine Datenleitung 9, welche im wesentlichen parallel zum optischen Übertragungsmedium 5 verläuft, zur Regeleinrichtung 4 als Eingangssignal geführt. In einer bestimmten Ausführungsform der Erfindung ist die Datenleitung 9 ein spektraler Kanal der optischen Faser 5. Die Regeleinrichtung steuert die Polarisationsstelleinrichtung 3 zum Verändern der Polarisation des Informationssignals I an.

Zur Reduktion der Verzerrung, beispielsweise der Verbreiterung von Informationssignalen, d.h. der optischen Impulse, wird unter Ansprechen der erfaßten Übertragungsgüte des Übertragungssystems 1 die Polarisationsstelleinrichtung 3 von der Regeleinrichtung 2 derart angesteuert, daß die Übertragungsgüte maximiert wird. Die oben stehende beschriebene Regelung hat zur Folge, daß das Licht in dem Abschnitt 5'' mit der bevorzugten Doppelbrechung eine Polarisation aufweist, die einem der Hauptpolarisationszustände des Abschnittes entspricht, so daß innerhalb dieses Bereiches keine Verzerrung, das heißt z.B. Verbreiterung des Signals auftritt. Auf diese Weise wird bezüglich der Polarisationsmodendispersion der Bereich "eliminiert", welcher ansonsten wesentlich zur Verzerrung des Signals beitragen würde.

Um zeitliche Fluktuationen der Doppelbrechung und die daraus resultierenden Folgen zu kompensieren, ist vorgesehen, die Maximierung der Übertragungsgüte zeitlich beabstandet wiederholt durchzuführen. Damit wird erreicht, daß zu jedem beliebigen Zeitpunkt die Polarisation des Lichtes innerhalb des Abschnittes 5'' mit der bevorzugten Doppelbrechung immer parallel zu einem der Hauptpolarisationszustände des Abschnittes der Übertragungsmediums polarisiert ist.

Die Polarisationsstelleinrichtung 3 in Fig. 1 umfaßt eine λ/4-, eine λ/2- und eine weitere λ/4-Verzögerungseinrichtung, wobei diese Verzögerungseinrichtungen hintereinander angeordnet und jeweils einstellbar, das heißt drehbar sind. Die drei Freiheitsgrade der Polarisationsstelleinrichtung werden über die Regeleinrichtung 4 entsprechend dem oben stehenden Verfahren geregelt. Mittels der gesamten Einrichtung 3 läßt sich jede beliebige Polarisation in eine weitere beliebige Polarisation umwandeln. Als Verzögerungseinrichtungen können Flüssigkristallelemente, elektrooptische Kristalle oder mechanisch, elektromotorisch oder piezoelektrisch verstellbare Verzögerungseinrichtungen, beispielsweise Faserschleifen umfaßt sein.

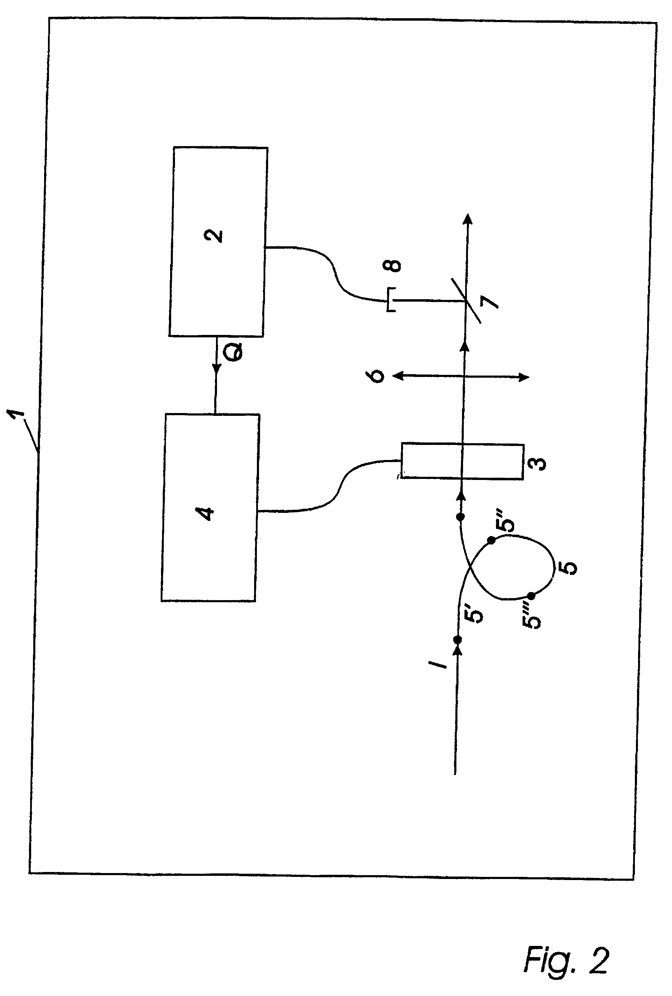

Fig. 2 zeigt eine Ausführungsform der Erfindung, bei welcher die Polarisationsstelleinrichtung 3 hinter dem Übertragungssystems umfassend das Übertragungsmedium 5 mit zumindest einem Abschnitt 5'', welcher eine bevorzugte Doppelbrechung aufweist, angeordnet ist. Bei dieser Ausführungsform befindet sich hinter der Polarisationsstelleinrichtung ein Analysator 6, welcher die signalverbreiternden oder -verzerrenden Polarisationsanteile des optischen Nachrichtenflusses je nach Ausführungsform des Analysators absorbiert oder deflektiert. Wieder wird ein geringer Teil des Nachrichtenflusses mittels des Strahlteilers 7 abgespalten und dem Detektor 8 zugeführt. Mit dessen Ausgangssignal wird eine Regeleinrichtung 2 gespeist, welche ein Signal Q abgibt, das ein Maß für die Übertragungsgüte ist. Dieses Signal wiederum ist die Eingangsgröße für die Regeleinrichtung 4, welche die Polarisationsstelleinrichtung 3 ansteuert. In der beschriebenen Ausführungsform der Erfindung umfaßt der Analysator 6, wie oben stehend dargestellt, einen linearen Polarisator, so daß das Polarisationsstellelement nur noch einen beliebigen Polarisationszustand in einen festen linearen Polarisationszustand umwandeln muß. Dies läßt sich mit einer λ/4- und einer λ/2-Verzögerungseinrichtung realisieren, die hintereinander angeordnet und jeweils einstellbar, das heißt drehbar ist.

Die optimale Einstellung der Polarisationsstelleinrichtung liegt dann vor, wenn das Licht, das in dem Faserstück mit bevorzugter Doppelbrechung den einen Hauptpolarisationszustand einnahm, auf Licht mit der Durchlaßpolarisation des Analysators abgebildet wird, wohingegen das Licht, das den anderen Polarisationszustand einnahm, auf Licht mit dem Sperrpolarisationszustand des linearen Polarisators abgebildet wird. Bevorzugt sollte das Licht, welches auf die Durchlaßpolarisation des Analysators abgebildet wird, den höheren Intensitätsanteil der gesamten Signalintensität aufweisen. Aus diesem Grund ist das Regelgerät derartig eingerichtet, daß es bei zu geringer optischer Intensität des Nachrichtenflusses hinter dem Analysator auf die andere Hauptpolarisationsrichtung des Abschnittes des Übertragungssystems, vorliegend eines Faserstückes 5'' mit der bevorzugten Doppelbrechung umschaltet.

In einer weiteren Ausführungsform der Erfindung kann anstelle des Strahlteilers 7 und des Detektors 8 in Figuren 1 und 2 die Messung der Übertragungsgüte gleichzeitig mit der Detektion der Information selbst direkt durch den Hauptdetektor am Ausgang der Übertragungsstrecke erfolgen.

## Patentansprüche

1. Verfahren zur Reduktion der in einem optischen Übertragungssystem (1) durch die Polarisationsmodendispersion hervorgerufene Verzerrung von in einem nachrichtenübertragenden Lichtstrom enthaltenen optischen Impulsen (I),
mit folgenden Verfahrensschritten:
unter Ansprechen auf die erfaßte Übertragungsgüte des Übertragungssystems wird eine Polarisationsstelleinrichtung (3) zum Einstellen der Polarisation optischer Impulse derart angesteuert, daß die Übertragungsgüte maximiert wird,
**dadurch gekennzeichnet, dass**
zur Bestimmung der Übertragungsgüte des Übertragungssystems ein geringer ausgekoppelter Teil des nachrichtenübertragenden Lichtstroms verwendet wird.

2. Verfahren nach Anspruch 1,
**dadurch gekennzeichnet, daß** die Polarisation der optischen Impulse zur Optimierung der Übertragung in vorbestimmten Zeitabständen erneut eingestellt wird.

3. Verfahren nach Anspruch 1 oder 2,
**dadurch gekennzeichnet, daß** die Polarisation optischer Impulse (I) am Eingang des optischen Übertragungssystems geregelt wird.

4. Verfahren nach Anspruch 1, oder 2
**dadurch gekennzeichnet, daß** mittels der Polarisationsstelleinrichtung (3) die Polarisation optischer Impulse am Ausgang des optischen Übertragungssystems (5) verändert wird und die optischen Impulse (I) nach dem optischen Übertragungssystem einen Analysator (6) durchlaufen.

5. Optisches Übertragungssystem (1) mit reduzierbarer Verzerrung der das System durchlaufenden, in einem nachrichtenübertragenden Lichtstrom enthaltenden optischen Impulse zur Durchführung des Verfahrens nach einem der Ansprüche 1 bis 4, umfassend
- ein optisches Übertragungsmedium
- eine Einrichtung (2) zur Bestimmung der Übertragungsgüte des Übertragungssystems, dessen Ausgangssignal am Eingang
- einer Regeleinrichtung (4) anliegt, die eine
- Polarisationsstelleinrichtung (3) zum Verändern der Polarisation der optischen Impulse derart ansteuert, daß eine Optimierung der Übertragungsgüte erfolgt;
**gekennzeichnet durch** einen Strahlteiler (7) zum Auskoppeln und Zuführen eines geringen Teils des nachrichtenübertragenden Lichtstroms zur Bestimmungseinrichtung (2).

6. Optisches Übertragungssystem Anspruch 5,
**dadurch gekennzeichnet, daß** die Polarisationsstelleinrichtung (3) am Eingang des Übertragungsmediums angeordnet ist.

7. Optisches Übertragungssystem nach Anspruch 5,
**dadurch gekennzeichnet, daß** die Polarisationsstelleinrichtung (3) am Ausgang des Übertragungsmediums angeordnet ist und weiterhin in Fortpflanzungsrichtung des Lichtes hinter der Polarisationsstelleinrichtung (3) ein Analysator (6) angeordnet ist.

8. Optisches Übertragungssystem nach einem der Ansprüche 5 bis 7,
**dadurch gekennzeichnet, daß** die Polarisationsstelleinrichtung (3) eine (/4-Verzögerungseinrichtung, eine (/2-Verzögerungseinrichtung und eine weitere (/4-Verzögerungseinrichtung umfaßt, wobei die Verzögerungseinrichtungen in dieser Reihenfolge hintereinander angeordnet und jeweils einstellbar sind.

9. Optisches Übertragungssystem nach Anspruch 7,
**dadurch gekennzeichnet, daß** der Analysator (6) ein linearer Analysator ist und die Polarisationsstelleinrichtung (3) eine (/4- und eine (/2-Verzögerungseinrichtung umfaßt, welche einstellbar sind.

10. Optisches Übertragungssystem nach einem der vorstehenden Ansprüche 5 bis 9,
**dadurch gekennzeichnet, daß** zumindest eine Verzögerungseinrichtung ein Flüssigkristallelement umfaßt.

11. Optisches Übertragungssystem nach einem der vorstehenden Ansprüche 5 bis 10,
**dadurch gekennzeichnet, daß** zumindest eine Verzögerungseinrichtung einen elektrooptischen Kristall umfaßt.

12. Optisches Übertragungssystem nach einem der vorstehenden Ansprüche 5 bis 11,
**dadurch gekennzeichnet, daß** zumindest eine Verzögerungseinrichtung ein mechanisch, elektromotorisch oder piezoelektrisch verstellbares Element aus drei Faserschleifen umfaßt.

## Claims

1. Method for reducing the distortion, caused in an optical transmission system (1) by polarization mode dispersion, of optical pulses (I) contained in a message-transmitting luminous flux,
with the following steps:
in response to the measured transmission quality of the transmission system, a polarization-adjusting apparatus (3) for adjusting the polarization of optical pulses is driven in such a manner that the transmission quality is maximized,
**characterized in that**
a small outcoupled portion of the message-transmitting luminous flux is used for determining the transmission quality of the transmission system.

2. Method according to claim 1,
**characterized in that** the polarization of the optical pulses is readjusted at predetermined time intervals in order to optimize the transmission.

3. Method according to claim 1 or 2,
**characterized in that** the polarization of optical pulses (I) is regulated at the input of the optical transmission system.

4. Method according to claim 1 or 2,
**characterized in that** the polarization of optical pulses at the output of the optical transmission system (5) is changed by means of the polarization-adjusting apparatus (3) and the optical pulses (I) pass through an analyzer (6) after the optical transmission system.

5. Optical transmission system (1) with reducible distortion of the optical pulses passing through the system and contained in a message-transmitting luminous flux, for implementing the method according to any one of claims 1 to 4, comprising
- an optical transmission medium
- an apparatus (2) for determining the transmission quality of the transmission system, the output signal of which is applied to the input of
- a regulating apparatus (4) driving a
- polarization-adjusting apparatus (3) for changing the polarization of the optical pulses in such a manner that the transmission quality is optimized;
**characterized by**
a beam splitter (7) for outcoupling and supplying a small portion of the message-transmitting luminous flux to the determining apparatus (2).

6. Optical transmission system according to claim 5,
**characterized in that** the polarization-adjusting apparatus (3) is disposed at the input of the transmission medium.

7. Optical transmission system according to claim 5,
**characterized in that** the polarization-adjusting apparatus (3) is disposed at the output of the transmission medium and further disposed in the propagation direction of the light after the polarization-adjusting apparatus (3) is an analyzer (6).

8. Optical transmission system according to any one of claims 5 to 7,
**characterized in that** the polarization-adjusting apparatus (3) comprises a (/4 retardation device, a (/2 retardation device and a further (/4 retardation device, the retardation devices being disposed one behind the other in this sequence and each being adjustable.

9. Optical transmission system according to claim 7,
**characterized in that** the analyzer (6) is a linear analyzer and the polarization-adjusting apparatus (3) comprises a (/4 and a (/2 retardation device which are adjustable.

10. Optical transmission system according to any one of preceding claims 5 to 9,
**characterized in that** at least one retardation device comprises a liquid-crystal element.

11. Optical transmission system according to any one of preceding claims 5 to 10,
**characterized in that** at least one retardation device comprises an electrooptical crystal.

12. Optical transmission system according to any one of preceding claims 5 to 11,
**characterized in that** at least one retardation device comprises an element consisting of three fibre loops, said element being adjustable by mechanical means, by electric motor or by piezoelectric means.

## Revendications

1. Procédé de réduction, dans un système de transmission optique (1), de la distorsion provoquée par la dispersion de mode de polarisation d'impulsions optiques (I) contenues dans un courant lumineux transférant des informations, comprenant les étapes de procédé suivantes:
en réponse à la qualité de transmission saisie du système de transmission, un dispositif de réglage de polarisation (3) destiné au réglage de la polarisation d'impulsions optiques est adressé de telle sorte que la qualité de transmission soit maximisée, **caractérisé en ce qu'**est utilisée, pour la détermination de la qualité de transmission du système de transmission, un partie faiblement désaccouplée du courant lumineux transmettant l'information.

2. Procédé selon la revendication 1, **caractérisé en ce que** la polarisation des impulsions optiques est réglée à nouveau à certaines périodes prédéterminées pour l'optimisation de la transmission.

3. Procédé selon la revendication 1 ou 2, **caractérisé en ce que** la polarisation des impulsions optiques (I) est régulée à l'entrée du système de transmission optique.

4. Procédé selon la revendication 1 ou 2, **caractérisé en ce que** la polarisation d'impulsions optiques est modifiée à la sortie du système de transmission optique (5) au moyen du dispositif de réglage de polarisation (3) et que les impulsions optiques traversent un analyseur (6) après le système de transmission optique.

5. Système de transmission optique (1) à distorsion réductible des impulsions optiques contenant un courant lumineux transférant des informations et traversant le système pour la réalisation du procédé selon l'une des revendications 1 à 4 comprenant
- un milieu de transmission optique
- un dispositif (2) de détermination de la qualité de transmission du système de transmission dont le signal de sortie est appliqué à l'entrée
- d'un dispositif de régulation (4) qui commande
- un dispositif de réglage de polarisation (3) destiné au réglage de la polarisation d'impulsions optiques adressé de telle sorte qu'intervienne une optimisation de la qualité de transmission, **caractérisé par** un séparateur de faisceaux (7) pour le désaccouplement et l'orientation d'une faible partie du courant lumineux transmettant l'information vers l'équipement de détermination (2).

6. Système de transmission optique selon la revendication 5, **caractérisé en ce que** le dispositif de réglage de polarisation (3) est implanté à l'entrée du milieu de transmission.

7. Système de transmission optique selon la revendication 5, **caractérisé en ce que** le dispositif de réglage de polarisation (3) est implanté à la sortie du milieu de transmission et en outre **en ce qu'**un analyseur (6) est agencé en amont du dispositif de réglage de polarisation (3).

8. Système de transmission optique selon l'une des revendications 5 à 7, **caractérisé en ce que** le dispositif de réglage de polarisation (3) comprend un dispositif temporisateur (/4, un dispositif temporisateur (/2, et un dispositif temporisateur (/4 supplémentaire, les dispositifs temporisateurs, étant disposés dans cet ordre et étant chacun réglables.

9. Système de transmission optique selon la revendication 7, **caractérisé en ce que** l'analyseur (6) est un analyseur linéaire et que le dispositif de réglage de polarisation (3) comprend un dispositif temporisateur (/4 et un dispositif temporisateur (/2 qui sont réglables.

10. Système de transmission optique selon l'une des revendications 5 à 9 précédentes, **caractérisé en ce que** l'un des dispositifs temporisateurs au moins comprend un élément à cristaux liquides.

11. Système de transmission optique selon l'une des revendications 5 à 10 précédentes, **caractérisé en ce que** l'un des dispositifs temporisateurs au moins comprend un cristal électro-optique.

12. Système de transmission optique selon l'une des revendications 5 à 11 précédentes, **caractérisé en ce que** l'un des dispositifs temporisateurs au moins comprend un élément réglable mécaniquement, par moteur électrique ou de façon piézo-électrique réalisé à partir de trois boucles de fibres.
